# EUROPÄISCHE PATENTSCHRIFT

(11) **EP 2 495 078 B1**
(45) Veröffentlichungstag und Bekanntmachung des Hinweises auf die Patenterteilung: **12.10.2016**
(21) Anmeldenummer: 12152075.3
(22) Anmeldetag: 23.01.2012
(51) Int. Cl.: B25D 17/08, B25D 17/24

(54) **Werkzeugaufnahme**
Tool collet
Carré conducteur

(30) Priorität: 02.03.2011 DE 102011004985
(43) Veröffentlichungstag der Anmeldung: 05.09.2012
(73) Patentinhaber: HILTI Aktiengesellschaft, 9494 Schaan (LI)
(72) Erfinder: Hauptmann, Udo, 86899 Landsberg (DE)
(74) Vertreter: Hilti Aktiengesellschaft Corporate Intellectual Property

(56) Entgegenhaltungen:
- EP-A1- 1 238 760
- DE-A1- 10 105 406
- JP-A- 2004 106 136
- US-A- 2 982 556
- US-A1- 2007 131 076

## Beschreibung

### GEBIET DER ERFINDUNG

Die vorliegende Erfindung betrifft eine Werkzeugaufnahme, insbesondere für eine meißelnde, rein meißelnde und/oder bohrmeißelnde Werkzeugmaschine, gemäß dem Oberbegriff von Anspruch 1 und wie aus der US 2 982 556 A bekannt.

### OFFENBARUNG DER ERFINDUNG

Ein Bohrhammer oder eine andere meißelnde Werkzeugmaschine soll ihren Betrieb selbst einstellen, sobald ein Anwender den Bohrhammer samt dem meißelnden Werkzeug von einem Untergrund oder Werkstück abhebt. Hierdurch wird eine Belastung des Anwenders und des Bohrhammers verringert. Das Abschalten wird ausgelöst, wenn das Werkzeug typisch für das Abheben von dem Bohrhammer weg aus einer Werkzeugaufnahme maximal ausrückt. Allerdings kann das Werkzeug aufgrund des zuletzt erhaltenen Schlags an einem Anschlag abprallen und in die Werkzeugaufnahme wieder einrücken. Ein Dämpfung dieses sogenannten Leerschlags kann ein solches Rückprallen verhindern und ein automatisches Abschalten begünstigen.

Die erfindungsgemäße Werkzeugaufnahme für eine meißelnde Werkzeugmaschine hat eine zu einer Arbeitsachse konzentrisch angeordneten Aufnahmehülse zum Aufnehmen eines Schaftendes eines Werkzeugs mit einer oder mehreren Verriegelungsnuten. Ein Verriegelungskörper der Werkzeugaufnahme ragt teilweise in die Aufnahmehülse zum Eingreifen in die Verriegelungsnut hinein. Der Verriegelungskörper ist längs der Arbeitsachse beweglich. Eine Kulisse ist mit dem Verriegelungskörper derart gekoppelt dass die Kulisse den Verriegelungskörper mittelbar oder unmittelbar führt. Die Kulisse hat einen um die Arbeitsachse schraubenförmig gewunden oder zur Arbeitsachse windschiefen Abschnitt. Die translatorische Bewegung des Werkzeugs bei einem Leerschlag führt zu einer Mitnahme des Verriegelungskörpers längs der Arbeitsachse. Die Kulisse erzwingt eine relative Rotation wenigstens eines Bauteils der Werkzeugmaschine gegenüber dem Werkzeug, wodurch wenigstens ein Teil der Stoßenergie in Rotationsenergie umgewandelt wird. Die Chiralität der Kulisse verhindert, dass die Rotationsenergie für eine Rückwärtsbewegung des Werkzeugs in die Werkzeugmaschine zurückgewonnen werden kann. Das Werkzeug bleibt vorzugsweise ausgerückt stehen. Die axial beweglichen Verriegelungskörper können selbst durch die Kulisse zu einer Rotation gezwungen sein und/oder die Kulisse in Rotation versetzten, falls die Kulisse gegenüber dem Verriegelungskörper um die Arbeitsachse drehbar gelagert ist. Weiters kann das Bauteil die Kulisse statt einer Drehung um die Arbeitsachse translatorisch senkrecht zur Arbeitsachse verschoben werden.

Die Erfindung sieht vor, dass eine Verriegelungshülse mit einer radial zur Arbeitsachse weisenden Innenseite den wenigstens einen Verriegelungskörper berührt und die Kulisse an der Innenseite der Verriegelungshülse ausgebildet ist. Die Verriegelungshülse hat ein großes Trägheitsmoment, welches die Umwandlung eines großen Anteils der Stoßenergie in Rotationsenergie ermöglicht. Die Verriegelungshülse kann um die Arbeitsachse drehbar gelagert sein.

Eine Ausgestaltung sieht vor, dass die Verriegelungshülse eine Aussparung an der Innenseite aufweist, in die ein weiterer Verriegelungskörper hineinragt, wobei eine Abmessung der Aussparung in Umfangsrichtung größer als eine Abmessung der Kulisse in Umfangsrichtung ist. Die Aussparung kann zur Arbeitsachse parallele Flanken aufweisen und die Kulisse kann zur Arbeitsachse windschiefe oder um die Arbeitsachse gewundene Flanken aufweisen. Bei einer Werkzeugaufnahme mit mehr als einem Verriegelungskörper zum Verriegeln des Werkzeugs kann es vorteilhaft sein, nur einen der Verriegelungskörper in einer schraubenförmigen oder windschiefen Kulisse zwangszuführen. Der oder die anderen Verriegelungskörper können unbeeinflusst von der Kulisse und einer Drehbewegung der Kulisse in ein oder mehreren der Aussparungen entlang der Arbeitsachse innerhalb der Verriegelungshülse bewegt werden.

Eine Ausgestaltung hat eine lösbare Kulissenverriegelung, die in einer verriegelnden Stellung die Kulisse in Schlagrichtung mit einer Feder kraftbeaufschlagt und in einer entriegelten Stellung die Feder von der Kulisse entkoppelt. Die Verriegelungshülse wird längs der Arbeitsachse beweglich, wodurch Reibungskräfte, die gegen eine Drehung wirken, verringert werden können. Weiters reduziert sich die Drehbewegung der Verriegelungshülse, da sie sich synchron zu den Verriegelungskörpern axial bewegen kann. Die Kulissenverriegelung kann die Feder und ein Kupplungselement aufweisen. Das Kupplungselement liegt durch die Feder kraftbeaufschlagt in Schlagrichtung an der Verriegelungshülse an. Ein von dem Anwender betätigbare Betätigungshülse der Werkzeugaufnahme ist entgegen der Schlagrichtung relativ zu der Verriegelungshülse beweglich. Die Betätigungshülse kann ferner mit dem Kupplungselement verbunden sein, z.B. materialschlüssig oder formschlüssig. Alternativ oder zusätzlich kann die Betätigungshülse entgegen der Schlagrichtung an dem Kupplungselement unmittelbar oder mittelbar durch eine starre Verbindung abgestützt sein.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Handwerkzeugmaschine,
- Fig. 2 bis 4: eine Werkzeugaufnahme,
- Fig. 5 und 6: eine Verriegelungshülse der Werkzeugaufnahme,
- Fig. 7 bis 9: eine Werkzeugaufnahme,
- Fig. 10: eine Verriegelungshülse der Werkzeugaufnahme"
- Fig. 11 und Fig. 12: eine Werkzeugaufnahme,
- Fig. 13 bis Fig. 15: eine Verriegelungshülse der Werkzeugaufnahme,
- Fig. 16 eine: abgerollte der Darstellung der Verriegelungshülse,
- Fig. 17 und Fig. 18: eine Aufnahmehülse einer Werkzeugaufnahme.

Gleiche oder funktionsgleiche Elemente werden durch gleiche Bezugszeichen in den Figuren indiziert, soweit nicht anders angegeben. Radial und axiale Richtungen beziehen sich, soweit es nicht explizit anders angegeben, auf eine Arbeitsachse der Werkzeugmaschine. Orientierungen sind ohne weiteren Vermerk in Bezug auf eine Schlagrichtung der Werkzeugmaschine angegeben, wonach ein hinteres Element gegenüber einem vorderen Element in Schlagrichtung versetzt ist. Eine Länge bezeichnet eine Abmessung längs einer (Längs-) Richtung der größten Ausdehnung eines Körpers, eine Breite ist die größte Abmessung in der Ebene senkrecht zu der Längsrichtung.

### AUSFÜHRUNGSFORMEN DER ERFINDUNG

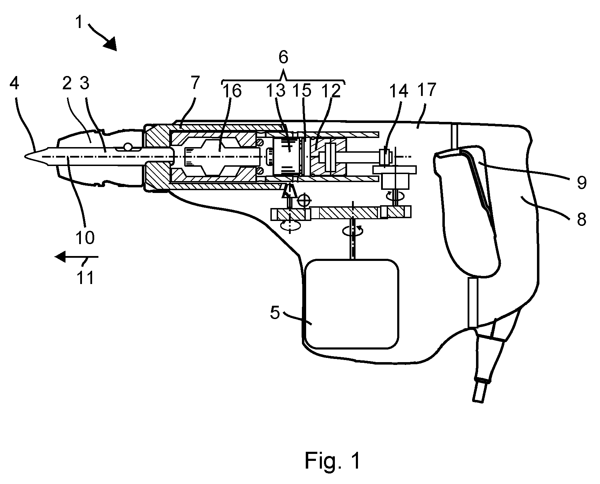

Fig. 1 zeigt als Beispiel einer meißelnden Handwerkzeugmaschine schematisch einen Bohrhammer **1**. Der Bohrhammer **1** hat eine Werkzeugaufnahme **2**, in welche ein Schaftende **3** eines Werkzeug, z.B. eines des Bohrmeißels **4**, eingesetzt werden kann. Einen primären Antrieb des Bohrhammers **1** bildet ein Motor **5**, welcher ein Schlagwerk **6** und eine Abtriebswelle **7** antreibt. Ein Anwender kann den Bohrhammer **1** mittels eines Handgriffs **8** führen und mittels eines Systemschalters **9** den Bohrhammer **1** in Betrieb nehmen. Im Betrieb dreht der Bohrhammer **1** den Bohrmeißel **4** kontinuierlich um eine Arbeitsachse **10** und kann dabei den Bohrmeißel **4** in Schlagrichtung **11** längs der Arbeitsachse **10** in einen Untergrund schlagen.

Das Schlagwerk **6** ist beispielsweise ein pneumatisches Schlagwerk **6**. Ein Erreger **12** und ein Schläger **13** sind in dem Schlagwerk **6** längs der Arbeitsachse **10** beweglich geführt. Der Erreger **12** ist über einen Exzenter **14** oder einen Taumelfinger an den Motor **5** angekoppelt und zu einer periodischen, linearen Bewegung gezwungen. Eine Luftfeder gebildet durch eine pneumatische Kammer **15** zwischen Erreger **12** und Schläger **13** koppelt eine Bewegung des Schlägers **13** an die Bewegung des Erregers **12** an. Der Schläger **13** kann direkt auf ein hinteres Ende des Bohrmeißels **4** aufschlagen oder mittelbar über einen im Wesentlichen ruhenden Zwischenschläger **16** einen Teil seines Impuls auf den Bohrmeißel **4** übertragen. Das Schlagwerk **6** und vorzugsweise die weiteren Antriebskomponenten sind innerhalb eines Maschinengehäuses **17** angeordnet.

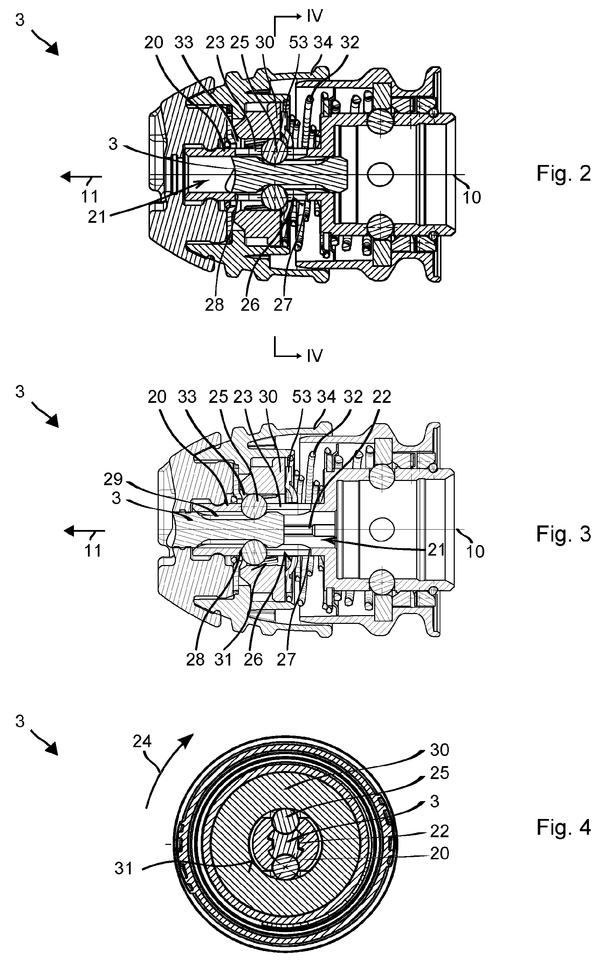

Fig. 2 und Fig. 3 zeigen Details der Werkzeugaufnahme **2** mit einem beispielhaften eingesetzten Schaftende **3**, welches in Fig. 2 in einer Grundstellung für einen bohrmeißelnden Betrieb, also anliegend an dem Zwischenschläger **16**, und in Fig. 3 in einer Stellung bei einem Leerschlag dargestellt ist. Fig. 4 zeigt einen Querschnitt in der Ebene IV-IV. Die Werkzeugaufnahme **2** hat eine Aufnahmehülse **20**, die konzentrisch zu der Arbeitsachse **10** angeordnet ist. Ein Innendurchmesser eines zylindrischen oder prismatischen Hohlraums **21** der Aufnahmehülse **20** ist mit einem geringen Spiel nahezu gleich einem Außendurchmesser des Schaftendes **3**, welches weitgehend standardisiert ist. Das Schaftende **3** ist in der Aufnahmehülse **20** längs der Arbeitsachse **10** geführt. Die dargestellte Werkzeugaufnahme **2** weist Stege **22** für eine Drehmitnahme des Schaftendes **3** auf. Die Stege **22** sind starr mit der Aufnahmehülse **20** verbunden und ragen in den Hohlraum **21** hinein. Geeignete Werkzeuge, z.B. Bohrmeißel, haben an ihrem Schaftende offene Längsnuten, in die die Stege **22** eingreifen. Das Schaftende **3** ist folglich gegen eine relative Drehung gegenüber der Aufnahmehülse **20** gesperrt und ein auf die Aufnahmehülse **20** ausgeübtes Drehmoment des Antriebs überträgt sich auf das Werkzeug **4**.

Die Aufnahmehülse **20** ist durch zwei Langlöcher **23** durchbrochen, welche den Hohlraum **21** in radialer Richtung, d.h. senkrecht zur Arbeitsachse **10** öffnen. Eine Abmessung der Langlöcher **23** längs der Arbeitsachse **10** ist typisch geringer als eine Abmessung der Langlöcher **23** in Umfangsrichtung **24** um die Arbeitsachse **10.** Verriegelungskörper **25** sind in die Langlöcher **23** eingesetzt und längs der Arbeitsachse **10** beweglich. Längsseiten **26** der Langlöcher **23** führen die Verriegelungskörper **25** in den Langlöchern **23** längs der Arbeitsachse **10** zwischen einem vorderen Ende **27** und einem hinteren Ende **28**. Beispiele für die Verriegelungskörper **25** sind rollende Kugeln, rollende Walzen, Klinken oder gleitende Stifte. Eine radiale Abmessung der Langlöcher **26** ist geringer als eine radiale Abmessung der Verriegelungskörper **25**. Die Verriegelungskörper **25** ragen sowohl nach Außen, d.h. von der Arbeitsachse **10** weg, über die Aufnahmehülse **20** hinaus, als auch nach Innen in den Hohlraum **21** der Aufnahmehülse **20** hinein.

Das Schaftende **3** hat längs der Arbeitsachse **10** eine oder mehrere beidseitig geschlossene Verriegelungsnuten **29**, in welche die Verriegelungskörper **25** eingreifen. Bei dem dargestellten Schaftende **3** ist eine Längsnut als Verriegelungsnut **29** vorgesehen. Das Werkzeug **4** ist in der Grundstellung maximal in die Werkzeugaufnahme **2** eingerückt, wobei die Verriegelungskörper **25** an dem vorderen Ende **27** der Langlöcher **23** anliegen können. Bei einem Leerschlag des Werkzeugs **4** kann das Werkzeug **4** sich in der Werkzeugaufnahme **2** längs der Arbeitsachse **10** um eine erste Wegstrecke bewegen, ohne die Verriegelungskörper **25** mitzunehmen, und anschließend um eine zweite Wegstrecke bewegen, wobei dann die Verriegelungskörper **25** entlang der Langlöcher **23** verschoben werden, bis die Verriegelungskörper **25** an dem hinteren Ende **28** zum Anliegen kommen. Alternative Schaftenden können beispielsweise eine kreisförmige Nut oder eine Ringnut aufweisen, in welchem Fall bei einer axialen Bewegung des Werkzeugs **4** immer die Verriegelungskörper **25** bewegt werden.

Eine Verriegelungshülse **30** ist über die Aufnahmehülse **20** und die Verriegelungskörper **25** gestülpt. Eine radial nach innen weisende Innenseite **31** der Verriegelungshülse **30** liegt an den Verriegelungskörpern **25** an, wodurch diese an einem Ausrücken aus dem Hohlraum **21** gehindert sind. Ein eingesetztes Werkzeug **4** ist somit mittels der Verriegelungskörper **25** und der Verriegelungshülse **30** verriegelt. Die Verriegelungshülse **30** kann gegen eine Rückstellkraft einer oder mehrerer Federn **32** axial verschoben werden, wodurch angrenzend an die Verriegelungskörper **25** in radialer Richtung ein Freiraum **33** freigegeben wird, in welchen die Verriegelungskörper **25** zum Ausrücken aus dem Hohlraum **21** ausweichen können. Ein Anwender kann die Verriegelungshülse **30** mittelbar durch eine von Außen frei zugängliche Betätigungshülse **34** verschieben. Die Verriegelungshülse **30** ist um die Arbeitsachse **10** drehbar gelagert. Insbesondere kann sich die Verriegelungshülse **30** um die Aufnahmehülse **20** drehen. Vorzugsweise kann sich die Verriegelungshülse **30** in der Betätigungshülse **34** ohne diese mitzunehmen frei drehen.

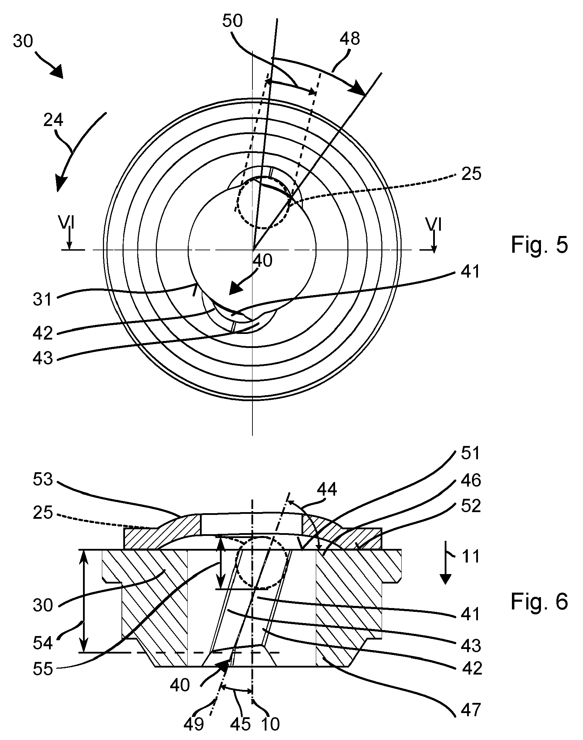

Fig. 5 und Fig. 6 zeigen die Verriegelungshülse **30** in einer Draufsicht entgegen der Schlagrichtung **11** und einem Querschnitt in der Ebene VI-VI. Die Innenseite **31** ist mit einer schraubenförmigen Kulisse **40** versehen, in die die Verriegelungskörper **25** eingreifen. Die Kulisse **40** ist beispielsweise durch eine Nut **41** ausgebildet, welche eine in Umfangsrichtung **24** vorlaufende Flanke **42** und eine nachlaufende Flanke **43** hat. Die beiden Flanken **42, 43** können schalenförmig, z.B. mit einem kreissegmentförmigen Querschnitt senkrecht zur Arbeitsachse **10** sein. Die Form der Nut **41**, bzw. die Nutwand, ist dem Verriegelungskörper **25** nachgebildet, d.h. eine Schnittfigur der Nut **41** in einer Schnittebene senkrecht zur Arbeitsachse **10** ist deckungsgleich zu einer Schnittfigur des Anteils des Verriegelungskörpers **25**, welcher in die Nut **41** eingreift. Die Schnittfigur der Nut **41** ist vorzugsweise für kugelförmige Verriegelungskörper **25** ein Kreissegment. Der Verriegelungskörper **25** greift in die Nut **41** ein und ist in Umfangsrichtung **24**, sowohl im Uhrzeigersinn als auch gegen den Uhrzeigersinn, an einer Bewegung in einer Ebene senkrecht zur Arbeitsachse **10** gehemmt.

Die Kulisse **40** oder Nut **41** windet sich schraubenförmig um die Arbeitsachse **10**. Ein Gangwinkel **44** der Kulisse **40**, d.h. die Neigung der Kulisse **40** gegenüber einer Ebene senkrecht zur Arbeitsachse **10** liegt vorzugsweise im Bereich zwischen 65 Grad und 85 Grad, z.B. zwischen 75 Grad und 82 Grad. Ein Steigungswinkel **45** der Nut **41** gegenüber der Arbeitsachse **10**, bestimmt entlang einer Zylinderfläche um die Arbeitsachse **10**, liegt entsprechend vorzugsweise im Bereich zwischen 5 Grad und 25 Grad, z.B. zwischen 8 Grad und 15 Grad. Die Kulisse **40** windet sich vorzugsweise nur um einen Bruchteil eines vollen Umlaufs, z.B. zwischen 1/20 bis 1/10 eines Umlaufs, um die Arbeitsachse **10**. Ein in Schlagrichtung **11** vorderes Ende **46** der Kulisse **40** ist gegenüber einem in Schlagrichtung **11** hinteren Ende **47** der Kulisse **40** um einen Winkel **48** zwischen 5 Grad und 25 Grad um die Arbeitsachse **10** gedreht angeordnet, vorzugsweise entgegen dem Uhrzeigersinn in Schlagrichtung **11** betrachtet. Die Kulisse **40** verläuft über seine gesamte Abmessung längs der Arbeitsachse **10** in gleichem Drehsinn um die Arbeitsachse **10**, ein Wechsel des Drehsinns längs der Arbeitsachse **10** ist nicht vorgesehen. Die Nut **41** kann näherungsweise auch als gerade und parallel zu einer Längsachse **49** orientiert sein. Die Längsachse **49** ist windschief zu der Arbeitsachse **10**, d.h. die Längsachse **49** der Nut **41** ist weder parallel zu der Arbeitsachse **10** noch schneidet die Längsachse **49** die Arbeitsachse **10**.

Schnittfiguren der Nut **41** senkrecht zur Arbeitsachse sind, wenn auch in verschiedenen Winkelpositionen bezogen auf die Arbeitsachse **10** angeordnet, vorzugsweise deckungsgleich. Der Verriegelungskörper **25** ist entlang der Nut **41** fortwährend zwangsgeführt. Bei einer Bewegung entlang der Nut **41** berührt der Verriegelungskörper vorzugsweise fortwährend die vorlaufende Flanke **42** und die nachlaufende Flanke **43**, die in konstanten Abstand **50** sind. Aufgrund der schraubenförmigen oder windschiefen Flanken **42** bzw. Nut **41** zwingt die Kulisse **40** einer sich längs der Arbeitsachse **10** bewegenden Verriegelungskörper **25** zu einer relativen Drehbewegung um die Arbeitsachse **10** bezogen auf die Verriegelungshülse **30**.

In der dargestellten Ausführungsform beginnt die Kulisse **40** an einer vorderen Kante **51** der Innenseite **31** oder einer vorderen Stirnfläche **52** der Verriegelungshülse **30**. Der Verriegelungskörper **25** ist in seiner Grundstellung (Fig. 2) typischerweise nahe der vorderen Kante **51** und somit im Eingriff mit der Kulisse **40**. Eine federbelastete Ringscheibe **53** an der vorderen Stirnfläche **52** hemmt den Verriegelungskörper **25** entgegen der Schlagrichtung **11** aus der Verriegelungshülse **30** und somit aus dem Eingriff mit der Kulisse **40** auszutreten. Die Ringscheibe **53** überlappt in radialer Richtung mit den Verriegelungskörpern **25**. Aufgrund des Eingriffs in der Grundstellung dreht sich die Verriegelungshülse **30** zusammen mit der Aufnahmehülse **20** während eines bohrenden oder bohrmeißelnden Betriebs der Handwerkzeugmaschine.

Eine Abmessung **54** der Kulisse **40** längs der Arbeitsachse **10** ist wenigstens 50 % länger wie die Abmessung **55** des Verriegelungskörpers **25** längs der Arbeitsachse **10** oder um wenigstens 0,5 cm länger. Die Länge **54** der Kulisse **40** liegt beispielsweise im Bereich zwischen 0,5 cm und 2 cm. Die Kulisse **40** kann sich über die gesamte Länge der Verriegelungshülse **30** erstrecken.

Bei einem Leerschlag des Werkzeugs **4** bewegt sich das Werkzeug **4** längs der Arbeitsachse **10** soweit aus der Werkzeugaufnahme **2** heraus, bis die Verriegelungskörper **25** an dem hinteren Ende **28** des Langlochs **23** anschlagen (Fig. 3). Die Verriegelungskörper **25** bewegen sich dabei in Schlagrichtung **11** entlang der Arbeitsachse **10**, z.B. von einem maschinenseitigen oder vorderen Ende **27** der Langlöcher **23** zu einem werkzeugseitigen oder hinterem Ende **28** der Langlöcher **23**. Der axialen Bewegung der Verriegelungskörper **25** folgend, wird die Verriegelungshülse **30** aufgrund der Kulisse **40** zu einer Drehung um die Arbeitsachse **10** gezwungen. Wenigstens ein Teil der Bewegungsenergie des Werkzeugs **4** wird in Rotationsenergie der Verriegelungshülse **30** umgewandelt. Die Verriegelungshülse **30** wird in einem ersten Drehsinn, vorgegeben durch die Kulisse **40**, drehbeschleunigt. Der erste Drehsinn ist beispielhaft in Schlagrichtung **11** blickend gegen den Uhrzeigersinn, gleich dem üblichen Drehsinn eines Bohrers oder Bohrmeißels **4**.

Typischerweise prallt das Werkzeug **4** an einem hinteren Anschlag ab, z.B. gebildet durch das hintere Ende **28** der Langlöcher **23**, und bewegt sich entgegen der Schlagrichtung **11** zurück. Die Rückwärtsbewegung ist durch die sich drehende Verriegelungshülse **30** nicht unterstützt, im Gegenteil bremst die drehende Verriegelungshülse **30** das Werkzeug **4**. Der Grund liegt in der Händigkeit oder Chiralität der Kulisse **40**, welche bei der Rückwärtsbewegung der Verriegelungskörper **25** zum Drehen in einem dem ersten Drehsinn entgegengesetzten zweiten Drehsinn gezwungen ist. Das Werkzeug **4** verliert rasch an Bewegungsenergie und bleibt vorzugsweise nahe dem hinteren Anschlag liegen. Die Rotationsenergie der Verriegelungshülse **30** kann durch Reibung z.B. an der Betätigungshülse **34**, oder durch ein Gegendrehmoment des Anwenders abgeleitet werden.

Die Verriegelungshülse **30** ist vorzugsweise längs der Arbeitsachse **10** durch die von dem Werkzeug **4** ausgeübten Kräften nicht bewegbar. Die dargestellte Verriegelungshülse **30** liegt in Schlagrichtung **11** an einem Anschlag an. Die Federn **32** üben eine Kraft in Schlagrichtung **11** aus, die größer als die axialen Anteile der von den Verriegelungskörpern **25** auf die Kulisse **40** übertragenen Kräfte ist.

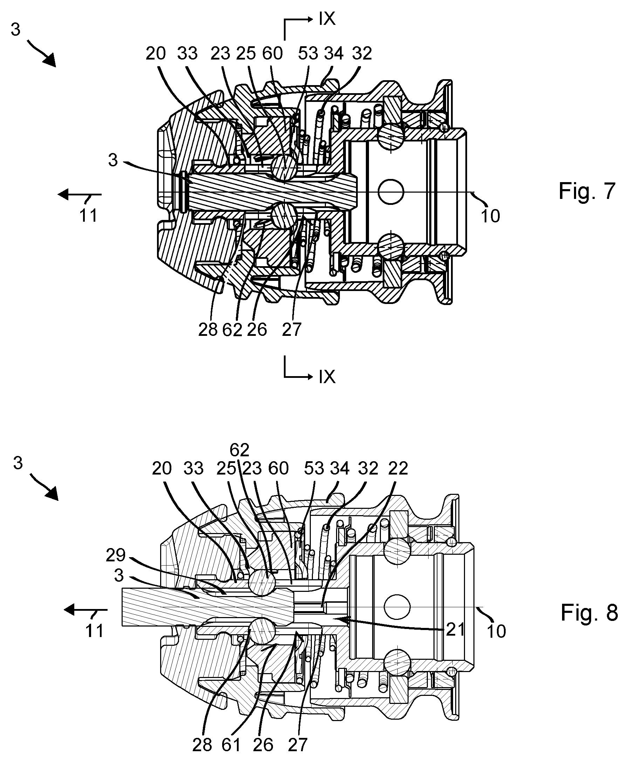

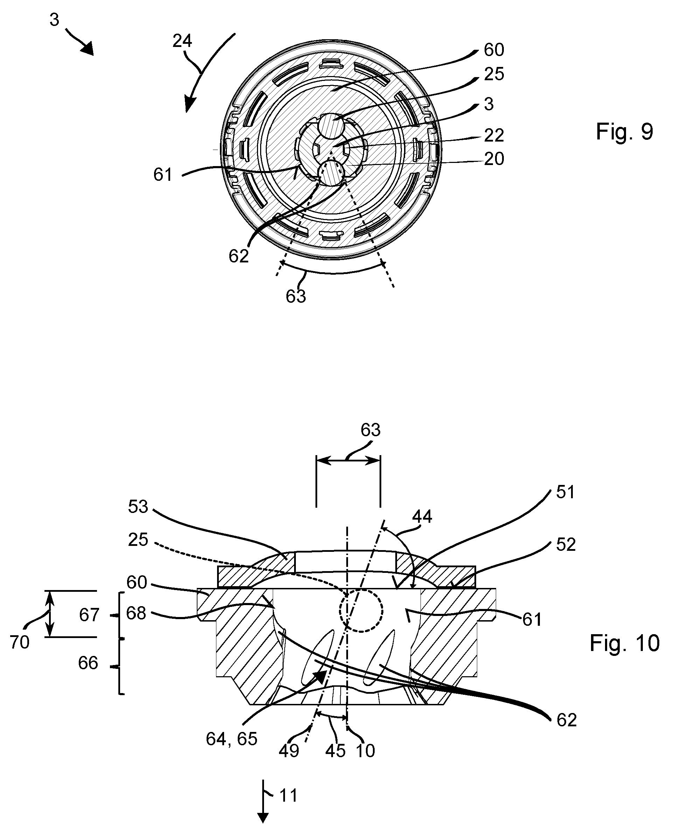

Fig. 7 und Fig. 8 zeigen eine Ausführungsform der Werkzeugaufnahme **2**, in Grundstellung und bei einem Leerschlag, Fig. 9 einen Querschnitt in der Ebene IX-IX. Fig. 10 zeigt einen Schnitt längs der Arbeitsachse **10** durch eine Verriegelungshülse **60** der Werkzeugaufnahme **2**.

An einer der Arbeitsachse **10** zugewandten Innenseite **61** hat die Verriegelungshülse **60** mehrere radial zur Arbeitsachse **10** vorstehende Rippen **62**, z.B. zwischen sechs und zehn Rippen **62**. Die Rippen **62** sind vorzugsweise entlang der Umfangsrichtung **24** gleichverteilt, in gleichen Winkelabständen **63** angeordnet. Jeweils zwei benachbarte Rippen **62** begrenzen eine nutähnliche Vertiefung **64**, welche als Kulisse **65** die Verriegelungskörper **25** führen kann. Der Winkelabstand **63** ist derart gewählt, dass der Verrieglungskörper **25** vorzugsweise gleichzeitig eine der ihm in Umfangsrichtung **24** vorlaufende und eine der ihm in Umfangsrichtung **24** nachlaufende Rippen **62** berührt. Der Verriegelungskörper **25** ist eingreifend in eine der Kulissen **65** an einer Bewegung in einer Ebene senkrecht zu der Arbeitsachse **10** gehemmt. Die Rippen **62** sind zu der Arbeitsachse **10** windschief oder um die Arbeitsachse **10** spiralförmig gewunden. Eine Neigung **45** gegenüber der Arbeitsachse **10** liegt im Bereich zwischen 5 Grad und 25 Grad, z.B. zwischen 8 Grad und 15 Grad.

Die Neigung **45** kann in Schlagrichtung **11** zunehmen. Insbesondere kann ein vorderer Abschnitt der Kulisse **65** eine Steigung von zwischen 1 Grad und 5 Grad aufweisen, während ein hinterer Abschnitt zwischen 8 Grad und 15 Grad geneigt ist.

Die Rippen **62** erstrecken sich längs der Arbeitsachse **10** nur über einen ersten Abschnitt **66** der Innenseite **61**. An die Rippen **62** bzw. Kulissen **65** schließt sich entgegen der Schlagrichtung **11** ein zweiter Abschnitt **67** mit einer glatten, zylindrischen Innenfläche **68** an, die koaxial zu der Arbeitsachse **10** ist. Die zylindrische Innenfläche **68** kann an dem Verriegelungskörper **25** anliegen. Eine axiale Abmessung **69** der zylindrischen Innenfläche **68** ist vorzugsweise etwa gleich oder bis zu 50% größer als eine Abmessung **70** des Verriegelungskörpers **25** längs der Arbeitsachse **10**. Die Verriegelungshülse **60** kann sich frei um die Arbeitsachse **10** drehen, wenn der gesamte Verriegelungskörper **25** mit der zylindrischen Innenfläche **68** längs der Arbeitsachse **10** überlappt.

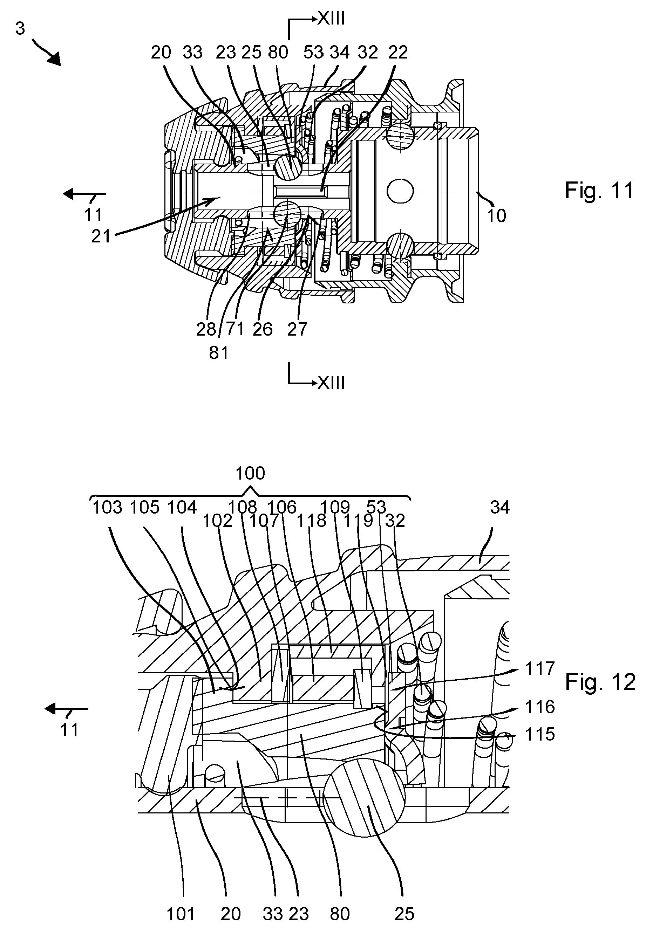

Fig. 11 zeigt eine Ausführungsform der Werkzeugaufnahme **3** in einem Längsschnitt; Fig. 12 einen Teilausschnitt von Fig. 11 in vergrößerter Darstellung. Die Werkzeugaufnahme **3** beinhaltet eine Aufnahmehülse **20**, die vorzugsweise symmetrisch zur Arbeitsachse **10** zwei Langlöcher **23** aufweist. In die Langlöcher **23** ist jeweils ein Verriegelungskörper **25, 71** eingesetzt ist, welcher die Aufnahmehülse **20** radial nach Innen und radial nach Außen überragt. Die Verriegelungshülse **80** hat eine zur Arbeitsachse **10** gerichtete Innenseite **81**, die die Verriegelungskörper **25** berührt.

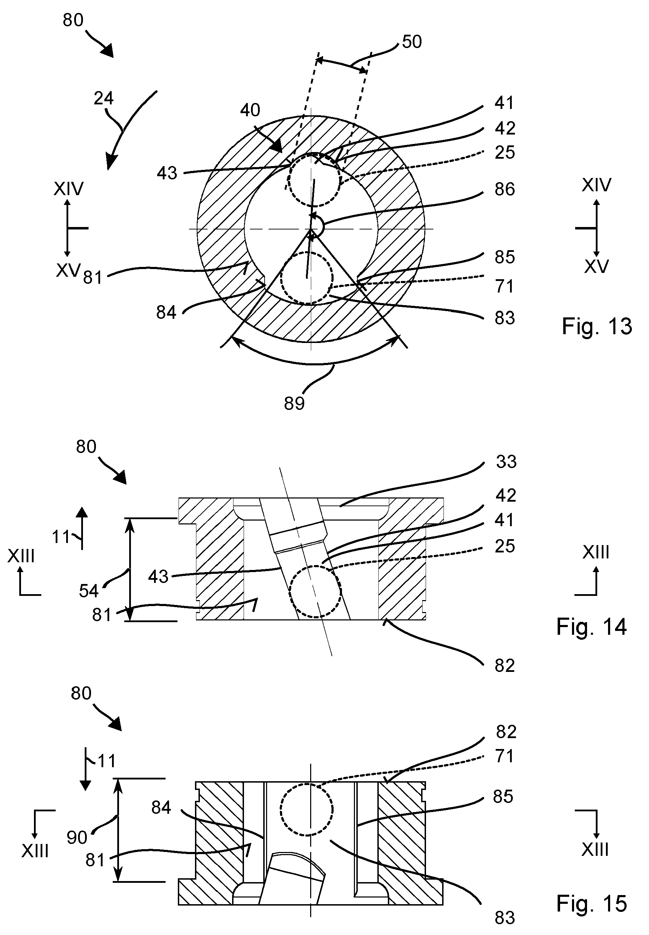

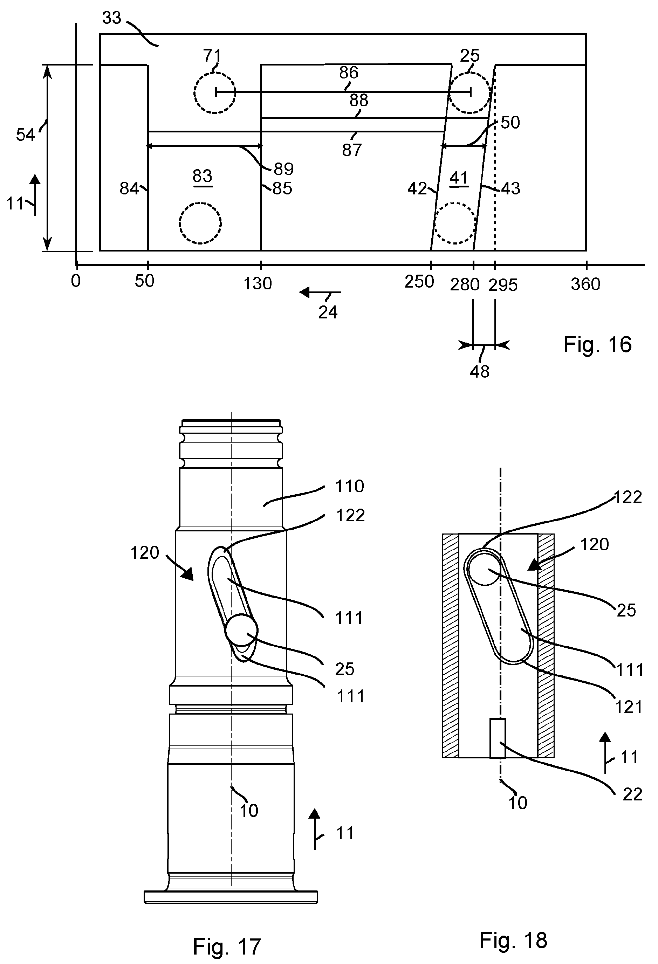

Fig. 13 zeigt die Verriegelungshülse **80** in einem Querschnitt entlang der Ebene XIII-XIII, Fig. 14 und Fig. 15 zeigen die Verriegelungshülse **80** in einem Längsschnitt in den gleichen Ebenen XIV-XIV, XV-XV in entgegengesetzte Blickrichtung. Fig. 16 zeigt schematisiert die Innenseite **81** entgegen der Umlaufsrichtung **24** abgerollt. Die Zahlen an der Abszisse geben beispielhafte Winkelpositionen in Grad bezüglich eines willkürlich gewählten Nullpunkts an.

An der Innenseite **81** ist eine windschiefe oder schraubenförmige Kulisse **40** ausgebildet, in welche ein erster der Verriegelungskörper **25** eingreift. Die Kulisse **40** kann beispielsweise wie obig in Zusammenhang mit Fig. 5 und 6 beschrieben ausgebildet sein. Die Kulisse **40** kann beispielsweise eine windschiefe oder schraubenförmige Nut **41** an der Innenseite **81** aufweisen. Eine in Umfangsrichtung **24** vorlaufende Flanke **42** und eine in Umfangsrichtung **24** nachlaufende Flanke **43** der Nut **41** sind windschief oder spiralförmig. Ein Abstand **50** der beiden Flanken **42, 43** ist vorzugsweise längs der Arbeitsachse **10** gleichbleibend. Der Abstand **50** ist so gewählt, dass zwischen den beiden Flanken **42**, **43** der Verriegelungskörper **25** eingefasst geführt ist, d.h. sowohl die vorlaufende Flanke **42** als auch die nachlaufende Flanke **43** berührt.

Die Nut **41** hat eine dem Verriegelungskörper **25** derart angepasste Form, dass der Verriegelungskörper **25** in der einer Ebene senkrecht zur Arbeitsachse **10** von der Nut **41** in und gegen die Umfangsrichtung **24** einfasst ist. In einem Querschnitt senkrecht zur Arbeitsachse **10** kann die Nut **41** beispielsweise die Form eines Kreissegments mit einem Radius, der einem Radius des kugelförmigen Verriegelungskörpers **25** entspricht, aufweisen. In einer bevorzugten Ausführungsform beginnt die Nut **41** an einem vorderen Ende **82** der Verriegelungshülse **80**. Eine Abmessung **54** der Nut **41** längs der Arbeitsachse **10** ist um wenigstens 50 % größer als eine Abmessung des Verriegelungskörpers **25** längs der Arbeitsachse **10**.

Die Verriegelungshülse **80** liegt an dem zweiten Verriegelungskörper **71** in radialer Richtung an, um diesen am Ausrücken aus dem Hohlraum **21** zu hindern. Im Gegensatz zu dem ersten Verriegelungskörper **25** ist der zweite Verriegelungskörper **71** in Umfangsrichtung **24** nicht von der Verriegelungshülse **80** eingefasst. Eine relative Drehung um die Arbeitsachse **10** der Verriegelungshülse **80** gegenüber dem zweiten Verriegelungskörper **71** ist möglich.

Die beispielhafte Ausführungsform der Verriegelungshülse **80** hat eine breite Aussparung **83** an der Innenseite **81**. Eine in Umfangsrichtung **24** vorlaufende Flanke **84** und eine in Umfangsrichtung **24** nachlaufende Flanke **85** können parallel zu der Arbeitsachse **10** sein. Die Winkelanordnung der Aussparung **83** gegenüber der Nut **41** ist entsprechend der Winkelanordnung der Verriegelungskörper **25**, **71**, d.h. deren Langlöcher **23** gewählt. Bei dem Beispiel sind die Verriegelungskörper **25**, **71** gegenüberliegend, um einen ersten Winkel **86** gleich 180 Grad angeordnet. Die Aussparung **83** liegt der Nut **41** gegenüber, d.h. ist um den ersten Winkel **86** zu der Nut **41** um die Arbeitsachse **10** gedreht angeordnet.

Wie vorausgehend beschrieben dreht sich die Verriegelungshülse **80,** wenn der erste Verriegelungskörper **25** längs der Arbeitsachse **10** bewegt wird. Die breite Aussparung **83** ist so ausgebildet, dass deren Flanken **84**, **85** den zweiten Verriegelungskörper **71** in keiner der eingenommenen Drehstellung berühren. Die vorlaufende Flanke **84** der Aussparung 83 ist um wenigstens den zweiten Winkel **87**, der vorzugsweise um 10 Grad größer als der erste Winkel **86** ist, entfernt. In dem dargestellten Beispiel von Fig. 16 ist der Abstand 200 Grad. Die nachlaufende Flanke **85** der Aussparung **83** ist von der nachlaufenden Flanke **43** der Nut **41** um höchstens einen dritten Winkel **88** entfernt, welcher vorzugsweise um 10 Grad kleiner als der erste Winkel ist, vgl. das Beispiel mit 165 Grad entfernt.

Die Abmessung **89** der Aussparung **83** in Umfangsrichtung **24** ist größer als die Summe des Winkels **48**, um den die Nut **41** sich um die Arbeitsachse **10** windet, und die Abmessung **50** der Nut **41** in Umfangsrichtung **24**. Die Aussparung **83** ist breiter als eine Projektion der Nut **41** auf eine Ebene senkrecht zur Arbeitsachse **10**, vorzugsweise um wenigstens 20 Grad breiter.

Eine Abmessung **90** der Aussparung **83** längs der Arbeitsachse **10** ist vorzugsweise gleich der Abmessung **54** der Kulisse **40** längs der Arbeitsachse **10**. Bei einer durch einen Leerschlag ausgelösten gemeinsamen geradlinigen Bewegung des ersten Verriegelungskörpers **25** und des zweiten Verriegelungskörpers **25** längs der Arbeitsachse **10** zwingt der erste Verriegelungskörper **25** die Verriegelungshülse **80** zu einer Rotation, während der zweite Verriegelungskörper **25** keine Kraft in oder gegen die Umfangsrichtung **24** auf die Verriegelungshülse **80** ausübt. Die Aussparung **83** hat ausreichend Spiel in Umfangsrichtung **24**, so dass deren Kanten oder Flanken **84**, **85** von dem zweiten Verriegelungskörper **25** bei der sich drehenden Verriegelungshülse **80** beabstandet bleiben.

Die Kulisse **40** soll bei einem Leerschlag durch den längs der Arbeitsachse **10** bewegten Verriegelungskörper **25** in eine Drehbewegung zum Vernichten von Bewegungsenergie beschleunigt werden. Beim Einsetzen oder Entnehmen eines Werkzeugs **4** wird das Verriegelungskörper **25** ebenfalls längs der Arbeitsachse **10** bewegt, jedoch möglichst ohne den Aufwand die Verriegelungshülse **80** in eine Drehung zu versetzen.

Eine lösbare Kulissenverriegelung **100** hemmt oder verhindert in einer verriegelten Stellung eine Bewegung der Verriegelungshülse **80** längs der Arbeitsachse **10** und ermöglicht in einer entriegelten Stellung die axiale Bewegung der Verriegelungshülse **80**. In letzterer Stellung kann sich die Kulisse **40** parallel mit dem Verriegelungskörper **25** bewegen und ist nicht zu einer relativen Drehbewegung gezwungen.

Die lösbare Kulissenverriegelung **100** ist mit der Betätigungshülse **34** gekoppelt. Wenn ein Anwender die Betätigungshülse **34** zur Entnahme des Werkzeugs **4** verschiebt, in dem dargestellten Beispiel entgegen der Schlagrichtung **11**, wird die Kulissenverriegelung **100** entriegelt. Ist Betätigungshülse **34** in einer Stellung zum Verriegeln des Werkzeugs **4**, ist die Kulissenverriegelung **100** ebenfalls in ihrer verriegelten Stellung.

Die beispielhafte lösbare Kulissenverriegelung **100** beinhaltet eine oder mehrere Federn **32**, die die Verriegelungshülse **80** in Schlagrichtung **11** gegen einen Anschlag drücken. Den Anschlag bildet beispielsweise eine Staubabdichtung **101.** Vorzugsweise ist der Anschlag gummiert, um eine hohe Reibung der Verriegelungshülse **80** zu bewirken. Die Feder **32** ist derart ausgelegt, dass ihre Federkraft größer als Kräfte sind, die seitens der Verriegelungshülse **80** während des Betriebs, längs der Arbeitsachse **10** ausgeübt werden. Die Verriegelungshülse **80** hat eine feste Position längs der Arbeitsachse **10**, soweit der Anwender nicht eingreift.

Die Kulissenverriegelung **100** hat ein starres Kopplungselement, welches in den Kraftpfad zwischen die Verriegelungshülse **80** durch die Feder **32** geschaltet ist. In einer verriegelnden Grundstellung überträgt das Kopplungselement die in Schlagrichtung **11** wirkende Kraft der Feder **32** auf die Verriegelungshülse **80**. Für eine entriegelnde Stellung kann das Kopplungselement von der Verriegelungshülse **80** gelöst werden, um den Kraftpfad zu unterbrechen. Das Entfernen des Kopplungselements von der Verriegelungshülse **80** erfolgt durch die Betätigungshülse, welche durch Verschieben oder Verdrehen in Eingriff mit dem Kopplungselement gebracht und das Kopplungselement mitnehmen kann.

Ein beispielhaftes Kopplungselement ist eine Ringscheibe **53**. Die Ringscheibe **53** hat eine entgegen der Schlagrichtung **11** weisende Seite, an welcher die Feder **32** anliegt. Ein in Schlagrichtung **11** weisende Seite **115** hat zwei Bereiche **116, 117**. Ein erster Bereich **116** liegt, in der Grundstellung, an der Verriegelungshülse **80** an. Die von der Feder **32** auf die Ringscheibe **53** übertragene Kraft wird in Schlagrichtung **11** in die Verriegelungshülse **80** eingeleitet. Ein zweiter Bereich **117** liegt in Schlagrichtung **11** einem Mitnehmer **118** der Betätigungshülse **34** gegenüber. Der Mitnehmer **118** kann beispielsweise durch eine zu der Betätigungshülse separate Distanzhülse **118** oder auch einen mit der Betätigungshülse **34** form- oder materialschlüssig verbunden Vorsprung gebildet sein. Zwischen der Ringscheibe **53** und dem Mitnehmer **118** ist in der Grundstellung vorzugsweise ein geringer Luftspalt **119**, um sicherzustellen, dass die Kraft der Feder **32** in die Verriegelungshülse **80** und nicht in die Betätigungshülse **34** eingeleitet wird. Wenn ein Anwender die Betätigungshülse **34** entgegen der Schlagrichtung **11** verschiebt, z.B. beim Entnehmen des Werkzeugs **4**, verschiebt der Mitnehmer **118** die Ringscheibe **53** entgegen der Schlagrichtung **11**. Die Kraft der Feder **32** ist nun durch die Ringscheibe **53** in die Betätigungshülse **34** eingeleitet, die Verriegelungshülse **80** ist kraftfrei. Eine Bremswirkung der Verriegelungshülse **80** ist vermindert oder aufgehoben. Die Betätigungshülse **34** und die Verriegelungshülse **80** sind vorzugsweise längs der Arbeitsachse **10** nur schwach gekoppelt, insbesondere verglichen zu der Kraft der Feder **32**.

Die Betätigungshülse **34** kann ein alternatives oder zusätzliches Kopplungselement der Kulissenverriegelung **100** sein. Ein beispielsweise ringförmiger, radialer Vorsprung **102** der Betätigungshülse **34** hintergreift auf einer der Feder **32** zugewandten Seite einen radialen Vorsprung **103** der Verriegelungshülse **80**. Eine in Schlagrichtung **11** weisende Fläche **104** der Betätigungshülse **34** liegt an einer entgegen der Schlagrichtung **11** weisenden Fläche **105** der Verriegelungshülse **80** an. Die Federkraft der Feder **32** wird durch die Betätigungshülse **34** auf die Verriegelungshülse **80** übertragen. Sobald ein Anwender die Betätigungshülse **34** jedoch entgegen der Schlagrichtung 11 verschiebt, wird der Kraftfluss unterbrochen und die Verriegelungshülse **80** von den Federn **32** entkoppelt.

Die Betätigungshülse **34** und die Verriegelungshülse **80** können durch eine weiche Feder **106** der Kulissenverriegelung **100** gekoppelt sein. Die weiche Feder **106** wirkt einer relativen Verschiebung der Betätigungshülse **34** in Schlagrichtung **11** bezogen auf die Verriegelungshülse **80** entgegen. Die weiche Feder **106** ist vorzugsweise eine Druckfeder, die in einen Kraftpfad längs der Arbeitsachse **10** zwischen der Betätigungshülse **34** und der Verriegelungshülse **80** angeordnet ist. In der Grundstellung der Werkzeugaufnahme **3** ist die weiche Feder vorzugsweise entspannt.

Die weiche Feder **106** ist zwischen einen in Schlagrichtung **11** weisenden Anschlag **109** der Verriegelungshülse **80** und einen entgegen der Schlagrichtung **11** weisenden Anschlag **108** der Betätigungshülse **34** angeordnet. Die beiden Anschläge **108**, **109** sind beispielsweise Ringe, welche axial gegenüber der Betätigungshülse **34** bzw. Verriegelungshülse **80** unbeweglich jedoch relativ zu der Betätigungshülse **34** und Verriegelungshülse **80** um die Arbeitsachse **10** drehbar sind. Der Ring **109** kann beispielsweise ein in eine ringförmige Nut in der Verriegelungshülse **80** eingesetzter Sprengring sein. In dem dargestellten Beispiel kann ein Luftspalt **107** zwischen der weichen Feder **106** und einem der Anschläge **108**, **109** sein, solange die Betätigungshülse **34** in Grundstellung ist. Die Federkonstante der weichen Feder **106** ist vorzugsweise geringer als ein Fünftel der Federkraft der Federn **32**. Die weiche Feder **32** kann eine Spiralfeder oder ein Ring aus einem Elastomer sein. Die Verriegelungshülse **80** bewegt sich beim Wechseln, insbesondere Entnehmen, des Werkzeugs **4** längs der Arbeitsachse **10** und wird nur in einem geringeren Umfang in eine Drehbewegung gezwungen. Die weiche Feder **106** bewirkt eine Mitnahme der Verriegelungshülse **80**, wenn ein Anwender die Betätigungshülse **34** entgegen der Schlagrichtung **11** verschiebt. Der Freiraum **33** verschiebt sich in Richtung des Langlochs **23**, in welchen der Verriegelungskörper **25** zum Freigeben des Schafts **3** radial ausweichen kann.

Die Kulissenverriegelung **100** ist nur beispielhaft in Zusammenhang mit der Verriegelungshülse **80** beschrieben und kann auch in den anderen Ausführungsformen der Werkzeugaufnahme **2** eingesetzt werden.

Fig. 17 zeigt eine Aufnahmehülse **110** einer weiteren Ausführungsform der Werkzeugaufnahme **2**, Fig. 18 einen Teilschnitt längs der Arbeitsachse **10**. Die Aufnahmehülse **110** hat ein oder mehrere Langlöcher **111**, in die Verriegelungskörper **25** eingesetzt sind. Die Verriegelungskörper **25** ragen in den prismatischen oder zylindrischen Hohlraum **21** der Aufnahmehülse **110**, um ein eingesetztes Werkzeug **4** mit einer Verriegelungsnut zu arretieren. Der Verriegelungskörper **25** hat eine geringere Abmessung längs der Arbeitsachse **10** als das Langloch **111** und kann sich deshalb längs der Arbeitsachse **10** in dem Langloch **111** bewegen. Das Langloch **111** stellt für den Verriegelungskörper **25** eine Kulisse **120** dar.

Wenigstens ein Abschnitt des Langlochs **111** ist schraubenförmig um die Arbeitsachse **10** gewunden. Ein in Schlagrichtung **11** hinteres Ende **121** des Langlochs **111** ist gegenüber einem in Schlagrichtung **11** vorderem Ende **122** um die Arbeitsachse **10** gedreht angeordnet. Vorzugsweise ist das Langloch **111** in Schlagrichtung **11** betrachtet gegen den Uhrzeigersinn gedreht. Sobald das Werkzeug **4** bei einer Bewegung in Schlagrichtung **11** die Verriegelungskörper **25** in dem gewundenen Abschnitt der Kulisse **120** bewegt, wird das Werkzeug **4** zu einer Rotation um die Arbeitsachse **10** gezwungen. Die Drehbewegung hindert das Werkzeug **4** die Verriegelungskörper **25** entgegen der Schlagrichtung **11** durch die gewundene Kulisse **120** zu schieben. Ein Rückprallen des Werkzeugs **4** nach einem Leerschlag wird erschwert.

Die Werkzeugaufnahme **2** hat kurze oder keine Stege **22** für eine Drehmitnahme, um ein Drehen des Werkzeugs **4** um die Arbeitsachse **10** zu ermöglichen. Vorzugsweise ist eine Abmessung der Stege **22** längs der Arbeitsachse **10** derart dimensioniert, dass das Schaftende **3** aus dem Eingriff der Stege **22** ist, wenn das Werkzeug **4** beginnt, die Verriegelungskörper **25** längs der Arbeitsachse **10** mitzubewegen. Der Steg **22** kann beispielsweise längs der Arbeitsachse **10** versetzt zu den Langlöchern **123** angeordnet sein.

Die vorgenannten Ausführungsformen können auch kombiniert werden. Die Werkzeugaufnahme **2** kann sowohl das Langloch **111** mit einer schraubenförmigen Kulisse **120**, als auch auf der Innenseite **31** der Verriegelungshülse **80** eine schraubenförmige Kulisse **40** aufweisen.

## Patentansprüche

1. Werkzeugaufnahme für eine meißelnde Werkzeugmaschine mit
einer zu einer Arbeitsachse (**10**) konzentrisch angeordneten Aufnahmehülse (**20**, **110**) zum Aufnehmen eines Schaftendes (**3**) eines Werkzeugs (**4**) mit einer Verriegelungsnut (**29**),
einem Verriegelungskörper (**25**), der teilweise in die Aufnahmehülse (**20**, **110**) zum Eingreifen in die wenigstens eine Verriegelungsnut (**29**) hineinragt und längs der Arbeitsachse (**10**) beweglich ist,
einer Kulisse (**40**, **65**, **120**), in der der Verriegelungskörper (**25**) geführt ist, wobei die Kulisse (**40**, **65**, **120**) einen um die Arbeitsachse (**10**) schraubenförmig gewundenen oder zur Arbeitsachse (**10**) windschiefen Abschnitt (**41**) aufweist, **dadurch gekennzeichnet, dass** eine Verriegelungshülse (**30**, **60**, **80**) mit einer radial zur Arbeitsachse (**10**) weisenden Innenseite (**31**, **61**) den wenigstens einen Verriegelungskörper (**25**) berührt und die Kulisse (**40**, **65, 120**) an der Innenseite (**31**, **61**) ausgebildet ist, um dem Verriegelungskörper (**25**) bei einer axialen Bewegung mittels der Kulisse (**40**, **65**, **120**) eine Drehbewegung um die Arbeitsachse (**10**) aufzuzwingen.

2. Werkzeugaufnahme nach Anspruch 1, **dadurch gekennzeichnet, dass** die Verriegelungshülse (**30**, **60**) um die Arbeitsachse (**10**) drehbar gelagert ist.

3. Werkzeugaufnahme nach Anspruch 1 oder 2, **dadurch gekennzeichnet, dass** der schraubenförmige Abschnitt der Kulisse (**40**, **65**, **120**) einen Steigungswinkel (**45**) zu der Arbeitsachse (**10**) zwischen 5 Grad und 25 Grad hat.

4. Werkzeugaufnahme nach einem der vorhergehenden Ansprüche, **dadurch gekennzeichnet, dass** der Verriegelungskörper (**25**) in Umfangsrichtung (**24**) und entgegen der Umfangsrichtung (**24**) an der Kulisse (**40**, **65**, **120**) anliegt.

5. Werkzeugaufnahme nach einem der vorhergehenden Ansprüche, **dadurch gekennzeichnet, dass** die Verriegelungshülse (**80**) eine Aussparung (**83**) an der Innenseite aufweist, in die ein weiterer Verriegelungskörper (**71**) hineinragt, wobei eine Abmessung (**89**) der Aussparung (**83**) in Umfangsrichtung (**24**) größer als eine Abmessung (**50**) der Kulisse (**40**) in Umfangsrichtung (**24**) ist.

6. Werkzeugaufnahme nach Anspruch 5, **dadurch gekennzeichnet, dass** die Aussparung (**83**) zur Arbeitsachse (**10**) parallele Flanken (**84**, **85**) und die Kulisse (**80**) zur Arbeitsachse (**10**) windschiefe oder um die Arbeitsachse (**10**) gewundene Flanken (**42**, **43**) aufweist.

7. Werkzeugaufnahme nach einem der vorhergehenden Ansprüche, **gekennzeichnet durch** eine lösbare Kulissenverriegelung (**100**), die in einer verriegelnden Stellung die Kulisse (**40**, **65**) mit einer Feder (**32**) in Schlagrichtung (**11**) wirkend kraftbeaufschlagt und in einer entriegelten Stellung die Feder (**32**) von der Kulisse (**40**, **65**) entkoppelt.

8. Werkzeugaufnahme nach Anspruch 7, **dadurch gekennzeichnet, dass** die Kulissenverriegelung (**100**) die Feder (**32**) und ein Kupplungselement (**53**, **102**) aufweist, wobei das Kupplungselement (**53**, **102**) durch die Feder (**32**) in Schlagrichtung (**11**) gegen die Verriegelungshülse (**30**, **60**, **80**) kraftbeaufschlagt ist, und eine Betätigungshülse (**34**) der Werkzeugaufnahme (**2**), die entgegen der Schlagrichtung (**11**) relativ zu der Verriegelungshülse (**30**, **60**, **80**) beweglich ist und mit dem Kupplungselement (**102**) verbunden oder entgegen der Schlagrichtung (**11**) an dem Kupplungselement (**53**) abgestützt ist.

9. Werkzeugaufnahme nach einem der vorhergehenden Ansprüche, **dadurch gekennzeichnet, dass** die Aufnahmehülse (**20**, **110**) wenigstens ein Langloch (**111**) aufweist, in welches der wenigstens eine Verriegelungskörper (**25**) eingesetzt ist, wobei das Langloch (**111**) wenigstens abschnittsweise schraubenförmig um die Arbeitsachse (**10**) gewunden ist.

## Claims

1. A chuck for a power tool having a chisel function, comprising:
a sleeve (20, 110) disposed concentrically relative to a working axis (10) for receiving a shank end (3) of a bit (4) provided with a locking groove (29);
a locking member (25), which extends partway into said sleeve (20, 110) to engage in the at least one locking groove (29) and which is movable along the working axis (10);
a connecting link (40, 65, 120), in which the locking member (25) is guided, the connecting link (40, 65, 120) having a portion (41) which is wound in the form of a helix about the working axis (10) or is skewed relative to the working axis (10);
**characterized in that** an inner side (31, 61) of a locking sleeve (30, 60, 80) oriented towards the working axis (10) in radial direction is in contact with the at least one locking member (25), and
the connecting link (40, 65, 120) is formed on the inside (31, 61) of the locking sleeve (30, 60, 80) so that, upon axial movement, said connecting link (40, 65, 120) forces the locking member (25) to rotate about the working axis (10).

2. A chuck according to Claim 1, **characterized in that** the locking sleeve (30, 60) is mounted in such a way as to rotate about the working axis (10).

3. A chuck according to Claim 1 or 2, **characterized in that** the helical portion of the connecting link (40, 65, 120) has a helix angle (45) relative to the working axis (10) of between 5 degrees and 25 degrees.

4. A chuck according to one of the preceding claims, **characterized in that** the locking member (25) rests against the connecting link (40, 65, 120) in circumferential direction (24) as well as counter to the circumferential direction (24).

5. A chuck according to one of the preceding claims, **characterized in that** the locking sleeve (80) has a recess (83) on the inside, into which another locking member (71) extends, a dimension (89) of the recess (83) in circumferential direction (24) being greater than a dimension (50) of the connecting link (40) in circumferential direction (24).

6. A chuck according to Claim 5, **characterized in that** the recess (83) has sides (84, 85) which extend parallel to the working axis (10), and the connecting link (80) has sides (42, 43) which are skewed relative to the working axis (10) or are wound about the working axis (10).

7. A chuck according to one of the preceding claims, **characterized by** a releasable connecting-link locking mechanism (100) which, in a locking position, applies force to the connecting link (40, 65) by means of a spring (32) acting in direction of impact (11), and, in an unlocked position, disconnects the spring (32) from the connecting link (40, 65).

8. A chuck according to Claim 7, **characterized in that** the connecting-link locking mechanism (100) comprises the spring (32) and a coupling element (53, 102), the coupling element (53, 102) being forced in direction of impact (11) against the locking sleeve (30, 60, 80) by the spring (32), and it also comprises an actuating sleeve (34) of the chuck (2), which is movable counter to the direction of impact (11) relative to the locking sleeve (30, 60, 80) and is connected to the coupling element (102) or is supported counter to the direction of impact (11) against the coupling element (53).

9. A chuck according to one of the preceding claims, **characterized in that** the sleeve (20, 110) has at least one slot (111) into which the at least one locking member (25) is inserted, the slot (111) being helically wound, at least in some areas, about the working axis (10).

## Revendications

1. Porte-outil pour une machine-outil à buriner, comportant
une douille de réception (20, 110) agencée de manière concentrique par rapport à un axe de travail (10) pour recevoir une extrémité de tige (3) d'un outil (4) ayant une rainure de blocage (29),
un élément de blocage (25) qui fait partiellement saillie dans la douille de réception (20, 110) pour s'engager dans la au moins une rainure de blocage (29) et est mobile le long de l'axe de travail (10),
une coulisse (40, 65, 120) dans laquelle l'élément de blocage (25) est guidé, dans lequel la coulisse (40, 65, 120) comporte une partie (41) enroulée hélicoïdalement autour de l'axe de travail (10) ou en biais par rapport à l'axe de travail (10), **caractérisé en ce qu'**une douille de blocage (30, 60, 80) vient en contact avec un côté intérieur (31, 61) dirigé radialement par rapport à l'axe de travail (10) du au moins un élément de blocage (25), et la coulisse (40, 65, 120) est formée sur le côté intérieur (31, 61) afin d'imposer à l'élément de blocage (25) un mouvement de rotation autour de l'axe de travail (10) lors d'un mouvement axial au moyen de la coulisse (40, 65, 120).

2. Porte-outil selon la revendication 1, **caractérisé en ce que** la douille de blocage (30, 60) est supportée de manière rotative autour de l'axe de travail (10).

3. Porte-outil selon la revendication 1 ou 2, **caractérisé en ce que** la partie hélicoïdale de la coulisse (40, 65, 120) a un angle d'inclinaison (45) par rapport à l'axe de travail (10) compris entre 5 degrés et 25 degrés.

4. Porte-outil selon l'une des revendications précédentes, **caractérisé en ce que** l'élément de blocage (25) est en contact avec la coulisse (40, 65, 120) dans une direction circonférentielle (24) et dans une direction opposée à la direction circonférentielle (24).

5. Porte-outil selon l'une des revendications précédentes, **caractérisé en ce que** la douille de blocage (80) comporte un évidement (83) sur le côté intérieur, dans lequel un élément de blocage supplémentaire (71) fait saillie, dans lequel une dimension (89) de l'évidement (83) dans la direction circonférentielle (24) est plus grande qu'une dimension (50) de la coulisse (40) dans la direction circonférentielle (24).

6. Porte-outil selon la revendication 5, **caractérisé en ce que** l'évidement (83) comporte des flancs (84, 85) parallèles à l'axe de travail (10) et la coulisse (80) comporte des flancs (42, 43) en biais par rapport à l'axe de travail (10) ou enroulés autour de l'axe de travail (10).

7. Porte-outil selon l'une des revendications précédentes, **caractérisé par** un dispositif de blocage de coulisse amovible (100) qui, dans une position bloquée, applique à la coulisse une force agissant dans une direction de percussion (11) avec un ressort (32) et désaccouple le ressort (32) de la coulisse (40, 65) dans une position débloquée.

8. Porte-outil selon la revendication 7, **caractérisé en ce que** le dispositif de blocage de coulisse (100) comporte le ressort (32) et un élément de couplage (53, 102), dans lequel une force est appliquée à l'élément de couplage (53, 102) par le ressort (32) contre la douille de blocage (30, 60, 80) dans la direction de percussion (11), et une douille d'actionnement (34) du porte-outil (2) qui est mobile par rapport à la douille de blocage (30, 60, 80) dans la direction opposée à la direction de percussion (11) et est reliée à l'élément de couplage (102) ou supportée par l'élément de couplage (53) dans la direction opposée à la direction de percussion (11).

9. Porte-outil selon l'une des revendications précédentes, **caractérisé en ce que** la douille de réception (20, 110) comporte au moins un trou oblong (111), dans lequel le au moins un élément de blocage (25) est introduit, dans lequel le trou oblong (111) est enroulé, au moins dans certaines parties, hélicoïdalement autour de l'axe de travail (10).
